# EUROPÄISCHE PATENTSCHRIFT

(11) **EP 2 593 247 B1**
(45) Veröffentlichungstag und Bekanntmachung des Hinweises auf die Patenterteilung: **21.12.2016**
(21) Anmeldenummer: 11758084.5
(22) Anmeldetag: 17.05.2011
(51) Int. Cl.: B09B 1/00, E02D 31/00

(54) **BASISABDICHTUNG EINER RÜCKSTANDSSALZHALDE**
BASE SEAL FOR A RESIDUAL SALT STOCKPILE
SYSTÈME D'ÉTANCHÉITÉ DE BASE POUR UNE DÉCHARGE DE RÉSIDUS DE SEL

(30) Priorität: 12.07.2010 DE 102010026863
(43) Veröffentlichungstag der Anmeldung: 22.05.2013
(73) Patentinhaber: K+S Aktiengesellschaft, 34131 Kassel (DE)
(72) Erfinder: FELDBERG, Ines, 39340 Haldensleben (DE); KIND, Hans-Joachim, 39291 Hohenwarthe (DE); KOCKX, Matthias, 39106 Magdeburg (DE); LESCH, Michael, 39599 Steinfeld (DE); PALM, Albrecht, 39579 Garlipp (DE); WESTPHAL, Martin, 39326 Wolmirstedt (DE)
(74) Vertreter: Patentanwälte Walther Hinz Bayer PartGmbB
(86) Internationale Anmeldenummer: PCT/DE2011/001077
(87) Internationale Veröffentlichungsnummer: WO 2012/006981

(56) Entgegenhaltungen:
- EP-A1- 0 443 567
- WO-A1-95/33894
- DE-A1- 4 117 270
- DE-A1- 19 540 387

## Beschreibung

Halden und obertägige Ablagerungen der unterschiedlichsten Art sind bekannt, so zum Beispiel auch Rückstandssalzhalden. Solche Rückstandssalzhalden haben häufig eine Höhe von über 120 m und erzeugen entsprechende Flächenlasten und Schubspannungen. Das heißt, durch das große Gewicht werden hohe Normal- und Tangentialkräfte auf den Untergrund der Aufstandsfläche ausgeübt. Die Folge hiervon ist eine Verformung an der Basis der Halde, das heißt, es treten Setzungen und vertikale Verschiebungen auf. Im Bereich der Verformung kann es zu Streckungen und Stauchungen des Dichtungssystems kommen. Im Zentrum der Halde sind diese Verformungen, hier die Setzungen, auflastbedingt höher als in den Randbereichen. In den Randbereichen treten neben den Setzungen auch vertikale Verschiebungen auf.

Diese Verformungen muss das Basisabdichtungssystem unter den jeweiligen haldentypischen Standortbedingungen aufnehmen.

Stand der Technik zur Abdichtung der Haldenbasis sind Tonabdichtungen, die auch für Rückstandssalzhalden zum Einsatz kommen. Hierbei wird auf dem Unterboden, auf dem die Halde aufgeschüttet wird, eine Tonschicht mit einer Mächtigkeit von ungefähr 0,3 m aufgebracht. Der Durchlässigkeitsbeiwert einer solchen Tonschicht liegt bei k ≤ 10⁻⁹ m/s. Eine andere Variante besteht in einer sogenannten Vergütung des Oberbodens. Unter einem vergüteten Oberboden wird ein Boden verstanden, in den Tonmehl oder Bentonit mit einem entsprechenden Gewichtsanteil eingearbeitet wird. Der Anteil des Tonmehls beträgt in Abhängigkeit von der Beschaffenheit des Bodens zwischen 3 und 10 Masseprozent.

Aus der EP 0 456 035 A2 ist in diesem Zusammenhang bekannt, bei einer Fahrbahndecke für befahrbare Verkehrsflächen, vornehmlich im Bereich von Tankstellen unterhalb des Fahrbahnbelages eine Dichtungsschicht aus einer Mischung aus Tonmineralien z. B. Montmorillonit und anderen Mineralstoffen vorzusehen. Die Mischung ist aus Fraktionen unterschiedlicher Körnung so zusammengesetzt, dass das Volumen der jeweils feineren Körnung größer als das Porenvolumen der jeweils größeren Körnung und das Größtkorn der feineren Körnung gleich oder kleiner als etwa 1/10 des Kleinstkorns der größeren Körnung sind.

Des Weiteren ist aus der EP 0 453 619 A1 ein mehrschichtiger Bodenaufbau für Plätze zum Ab- und Umfüllen von wassergefährdenden Stoffen, insbesondere Kohlenwasserstoffen bekannt, der eine Bentonit enthaltende Sperrschicht aufweist.

Aus der DE 19540387A1 sind mehrere Varianten einer Basisabdichtung bekannt. Eine Variante einer Basisabdichtung stellt sich als Basisabdichtungssystem aus multimineralischen Dichtungsschichten mit mindestens einer mineralischen Dichtungsschicht dar. Die Dichtungsschicht weist als Unterlage ein Geotextil auf, wobei auf dem Geotextil ein tonmineralischer Erdbaustoff vorgesehen ist, der eine Abdeckung aus Gießereialtsand aufweist. Diese Schicht aus Gießereialtsand und tonmineralischen Erdbaustoff ergibt die mineralische Dichtungsschicht. Hier fungiert der Gießereialtsand als Opferschicht für den tonmineralischen Erdbaustoff, und zwar insofern, als der Gießereialtsand zur Selbstheilung von Rissen in der Dichtungsschicht insgesamt eindringt.

Nach einer anderen Variante ist als Dichtungsschicht ein Gemisch aus Tonmehl und Gießereialtsand vorgesehen.

Eine weitere Variante für eine mineralische Dichtungsschicht zeichnet sich durch ein Gemisch aus einem tonmineralischen Erdbaustoff und Gießereialtsand aus. Weiterhin wird dann auch noch eine Variante einer mineralischen Dichtungsschicht als Gemisch einer körnigen Dichtungsschicht mit einem Anteil an Sand/Kies mit einer Körnung von 0,6 bis 32 mm beschrieben, wobei die Korngröße von 0 bis 0,6 mm durch Bentonit gebundene Gießereialtsande ersetzt wird. Alternativ hierzu wird vorgeschlagen gebrochenen technischen Schlacke/Drainagenkies mit einer Körnung ab 0,6 bis 32 mm einzusetzen, wobei auch hier die Korngröße von 0 bis 0,6 mm durch Bentonit gebundene Gießereialtsande ersetzt wird.

Es sei an dieser Stelle darauf hingewiesen, dass der Einsatz dieser Bentonit gebundenen Gießereisande zum Ersatz von Sand/Kies bzw. von technischer Schlacke/Drainagenkies vor dem Hintergrund erfolgt, solche natürlichen tonigen/schluffigen, sandigen und kiesigen Erdbaumaterialien durch einen billigen Ersatzstoff auszutauschen, ohne die Eigenschaften des Dichtungsmaterials zu verschlechtern.

Für die Weiterverarbeitung der einzelnen Komponenten zur Herstellung der Basisabdichtung ist vorgesehen, entweder die Einzelkomponenten einzeln dosiert einem Mischer zuzuführen und unter Wasserzugabe zu vermischen oder aber die Einzelkomponenten schichtweise auf Halde zu legen, um diese mittels einer Fräse bzw. eines Grubbers unter Wasserzugabe zu vermischen.

Aufgrund der haldenspezifischen Gegebenheiten (hohe Auflast, Anfall von versalzenem Haldenwasser, Löslichkeit und viskoplastisches Materialverhalten des Haldenmaterials) muss die Basisabdichtung über eine entsprechende Festigkeit verfügen, die den mechanischen Beanspruchungen widersteht und die die Standsicherheit des Haldenkörpers nicht negativ beeinflusst. Andererseits muss sie ausreichend verformbar sein, um die auflastbedingten Verformungen des Untergrundes und der Basisabdichtung aufzunehmen, ohne dabei ihre Wirksamkeit zu verlieren.

Die der Erfindung zugrunde liegende Aufgabe besteht demzufolge darin, eine alternative Basisabdichtung für eine Halde insbesondere eine Rückstandssalzhalde bereitzustellen, die unter standorttypischen Gegebenheiten den Verformungen widerstehen kann, ohne dass es zu einer wesentlichen Verschlechterung des Durchlässigkeitsbeiwerts kommt.

Zur Lösung der Aufgabe wird erfindungsgemäß bei einer Basisabdichtung einer Halde, insbesondere einer Rückstandssalzhalde, vorgeschlagen, dass die Basisabdichtung zwei übereinander angeordnete Schichten umfasst, wobei die obere Schicht aus einem Gemisch aus Kies mit einem Körnungsbereich von 8 bis 16 mm, Sand mit einem Körnungsbereich von 0 bis 2 mm und Bentonit oder Tonmehl mit einem Durchlässigkeitsbeiwert von k ≤ 10⁻⁹ m/s besteht, und die untere Schicht aus einem Gemisch aus Sand mit einem Körnungsbereich von 0 bis 2 mm und Bentonit oder Tonmehl mit einem Durchlässigkeitsbeiwert von k ≤ 5*10⁻¹⁰ m/s und gegebenenfalls einem Polymer besteht. Die Wahl zwischen Bentonit oder Tonmehl als Teil des Gemisches zur Bildung der Schicht der Basisabdichtung hängt davon ab, welches Material tatsächlich in ausreichender Menge zur Verfügung steht. Bei dem Einsatz von Bentonit beträgt der Smektitanteil mehr als 50 %, das Tonmehl enthält Illit und Smektit in unterschiedlichen Mengenanteilen. Eine Basisabdichtung, die in dieser Weise ausgebildet ist, wirkt unter Beanspruchung der Halde in folgender Weise: Die obere Schicht der Basisabdeckung mit einem Gemisch aus Kies, Sand und Bentonit oder Tonmehl stellt eine sogenannte kornabgestufte, mineralische Dichtung dar, wobei der Körnungsbereich des Sandes zwischen 0 und 2 mm und der des Kieses zwischen 8 und 16 mmbeträgt. Die untere Schicht, die aus Sand und Bentonit oder Tonmehl hergestellt ist, ist von der Konsistenz her duktiler als die obere Schicht. Aufgrund des Gewichts der Halde treten Beanspruchungen an der Basis auf, was zu Streckungen und Stauchungen führen kann. Kommt es zu einer solchen Verformung, dann hat sich herausgestellt, dass bei einer Streckung der Basisabdichtung die untere Schicht in die obere Schicht eindringt, und dort wiederum dafür sorgt, dass die Basisabdichtung weiterhin ihre Funktion erfüllt. Das heißt, die Basisabdichtung regeneriert sich im Zuge der Verformung selbst. Zur Verminderung des Durchlässigkeitsbeiwertes umfasst nach einer Variante das Gemisch der unteren Schicht ein Polymer (z. B. eine lange Kohlenstoffkette mit hoher Molmasse und entsprechend aktiven Seitengruppen), was auch die Salzresistenz noch verbessert.

Vorteilhafte Merkmale und Ausgestaltungen der Erfindung ergeben sich aus den Unteransprüchen.

So ist insbesondere vorgesehen, dass der Reibungswinkel der oberen Schicht ϕ ≥ 35 ° und der der unteren Schicht ϕ ≥ 30° beträgt. Bei auflastbedingter Verformung der Basisabdichtung, die sowohl vertikal als auch horizontal erfolgen kann, kann das Material des Gemisches der unteren Schicht in die Unterseite der oberen Schicht eindringen und sorgt auf diese Weise für einen im Wesentlichen gleichbleibenden Durchlässigkeitsbeiwert.

Ferner hat sich herausgestellt, dass der Anteil an Bentonit oder Tonmehl in dem Gemisch für die obere Schicht ca. 2 bis 10 Gewichtsprozent, vorzugsweise 3 bis 5 Gewichtsprozent an dem Gesamtgemisch beträgt. Der Anteil an Bentonit oder Tonmehl in dem Gemisch für die untere Schicht liegt bei ≥ 11 Gewichtsprozent in Bezug auf das Gesamtgemisch. Weiterhin hat es sich als vorteilhaft herausgestellt, wenn die obere Schicht eine Mächtigkeit von ≥ 0,2 m, hingegen die untere Schicht eine Mächtigkeit von ≥ 0,1 m aufweist. Es sei an dieser Stelle darauf hingewiesen, dass die Menge an Tonmehl oder Bentonit in dem Gemisch der oberen Schicht im Wesentlichen von der Kornverteilung des Kiesanteiles abhängig ist. Das heißt, in Abhängigkeit von der Kornverteilung erfolgt die Zugabe von Tonmehl oder Bentonit. Es ist Stand der Technik, dass in Laborversuchen die Kornverteilung ermittelt und der Bentonit oder Tonmehlanteil darauf abgestimmt wird. Festzuhalten ist somit, dass aufgrund der Beanspruchungen die einzelnen Schichten sich aufgrund des Pressverbundes gegeneinander abdichten.
Weiter auf Seite 5 der ursprünglichen Beschreibung
Anhand der Zeichnungen wird die Erfindung nachstehend beispielhaft näher erläutert und eingereicht.
- Figur 1: zeigt im Schnitt schematisch eine Rückstandssalzhalde;
- Figur 2: zeigt schematisch eine zweischichtige ausgebildete Basisabdichtung im Ausgangszustand;
- Figur 3: zeigt eine Basisabdichtung gemäß Figur 2 nach einer Verformung.

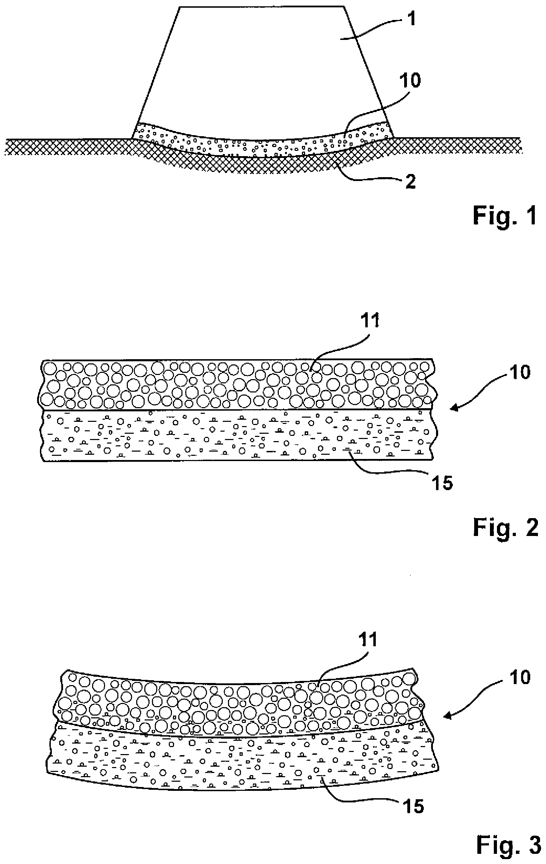

Die mit 1 bezeichnete Rückstandssalzhalde steht auf dem Unterboden 2 auf, wobei sich zwischen der Rückstandssalzhalde 1 und dem Unterboden 2 die mit 10 bezeichnete Basisabdichtung befindet. Die mit 10 bezeichnete Basisabdichtung umfasst die obere Schicht 11, und die untere Schicht 15. Die obere Schicht 11 weist ein Gemisch aus Kies, Sand und Bentonit oder Tonmehl auf, wohingegen die untere Schicht feiner ausgebildet ist, und Sand und Bentonit oder Tonmehl aufweist. Bei der Darstellung gemäß Figur 2 ist der Ausgangszustand der Basisabdichtung dargestellt.

Es ist bekannt, dass sich unter der Einwirkung der Beanspruchungen die Basisabdichtung verformen kann. Die Wirksamkeit der Basisabdichtung wird in den verformten Bereichen, die gestaucht und verdichtet werden nicht beeinflusst. In den Bereichen, die gestreckt und verdichtet werden, kann die Wirksamkeit zunehmen, das heißt, der Durchlässigkeitsbeiwert bleibt gleich oder wird geringer. Das Prinzip der erfindungsgemäßen Basisabdichtung besteht nunmehr darin, dass die untere Schicht 15, die feiner und duktiler ausgebildet ist als die obere Schicht 16, sich in den unteren Teil der oberen Schicht einpresst, und so die gesamte Basisabdichtung wirksam bleibt bzw. die Wirksamkeit sich verbessert.

## Patentansprüche

1. Basisabdichtung einer Rückstandssalzhalde umfassend zwei übereinander angeordnete Schichten, wobei die obere Schicht aus einem Gemisch aus Kies mit einem Körnungsbereich von 8 bis 16 mm, Sand mit einem Körnungsbereich von 0 bis 2 mm und Bentonit oder Tonmehl mit einem Durchlässigkeitsbeiwert von k ≤ 10⁻⁹ m/s besteht, und die untere Schicht aus einem Gemisch aus Sand mit einem Körnungsbereich von 0 bis 2 mm und Bentonit oder Tonmehl mit einem Durchlässigkeitsbeiwert von k ≤ 5*10⁻¹⁰ m/s besteht.

2. Basisabdichtung einer Rückstandssalzhalde umfassend zwei übereinander angeordnete Schichten, wobei die obere Schicht aus einem Gemisch aus Kies mit einem Körnungsbereich von 8 bis 16 mm, Sand mit einem Körnungsbereich von 0 bis 2 mm und Bentonit oder Tonmehl mit einem Durchlässigkeitsbeiwert von k ≤ 10⁻⁹ m/s besteht, und die untere Schicht aus einem Gemisch aus Sand mit einem Körnungsbereich von 0 bis 2 mm und Bentonit oder Tonmehl mit einem Durchlässigkeitsbeiwert von k ≤ 5*10⁻¹⁰ m/s und einem Polymer zur Verminderung des Durchlässigkeitsbeiwertes besteht.

3. Basisabdichtung einer Halde nach Anspruch 1 oder 2,
**dadurch gekennzeichnet,**
**dass** der Reibungswinkel der oberen Schicht ϕ ≥ 35 ° beträgt.

4. Basisabdichtung einer Halde nach einem oder mehrerer der voranstehenden Ansprüche,
**dadurch gekennzeichnet,**
**dass** der Reibungswinkel der unteren Schicht ϕ ≥ 30 ° beträgt.

5. Basisabdichtung einer Halde nach einem oder mehrerer der voranstehenden Ansprüche
**dadurch gekennzeichnet,**
**dass** der Anteil an Bentonit oder Tonmehl in dem Gemisch für die obere Schicht ca. 2-10 Gew. %, vorzugsweise 3-5 Gew. % beträgt.

6. Basisabdichtung einer Halde nach einem oder mehrerer der voranstehenden Ansprüche
**dadurch gekennzeichnet,**
**dass** der Anteil an Bentonit oder Tonmehl in dem Gemisch für die untere Schicht ≥ 11 Gew. % beträgt.

7. Basisabdichtung einer Halde nach einem oder mehrerer der voranstehenden Ansprüche
**dadurch gekennzeichnet,**
**dass** die obere Schicht eine Mächtigkeit von ≥ 0,2 m aufweist.

8. Basisabdichtung einer Halde nach einem oder mehrerer der voranstehenden Ansprüche
**dadurch gekennzeichnet,**
**dass** die untere Schicht eine Mächtigkeit von ≥ 0,1 m aufweist.

## Claims

1. A base seal of a residual salt stockpile comprising two layers disposed on top of one another, wherein the upper layer is composed of a mixture of gravel with a grain range of 8 to 16 mm, sand with a grain range of 0 to 2 mm and bentonite or powdered clay with a permeability coefficient of k ≤ 10⁻⁹ m/s, and the lower layer is composed of a mixture of sand with a grain range of 0 to 2 mm and bentonite or powdered clay with a permeability coefficient of k ≤ 5*10⁻¹⁰ m/s.

2. A base seal of a residual salt stockpile comprising two layers disposed on top of one another, wherein the upper layer is composed of a mixture of gravel with a grain range of 8 to 16 mm, sand with a grain range of 0 to 2 mm and bentonite or powdered clay with a permeability coefficient of k ≤ 10⁻⁹ m/s, and the lower layer is composed of a mixture of sand with a grain range of 0 to 2 mm and bentonite or powdered clay with a permeability coefficient of k ≤ 5*10⁻¹⁰ m/s and a polymer for reducing the permeability coefficient.

3. The base seal of a stockpile according to claim 1 or 2,
**characterized in that**
the friction angle of the upper layer amounts to ϕ ≥ 35°.

4. The base seal of a stockpile according to one or several of the afore-mentioned claims,
**characterized in that**
the friction angle of the lower layer amounts to ϕ ≥ 30°.

5. The base seal of a stockpile according to one or several of the afore-mentioned claims,
**characterized in that**
the proportion of bentonite or powdered clay in the mixture for the upper layer amounts to ca. 2-10 weight percent, preferably 3-5 weight percent.

6. The base seal of a stockpile according to one or several of the afore-mentioned claims,
**characterized in that**
the proportion of bentonite or powdered clay in the mixture for the lower layer amounts to ≥ 11 weight percent.

7. The base seal of a stockpile according to one or several of the afore-mentioned claims,
**characterized in that**
the upper layer has a thickness of ≥ 0.2 m.

8. The base seal of a stockpile according to one or several of the afore-mentioned claims,
**characterized in that**
the lower layer has a thickness of ≥ 0.1 m.

## Revendications

1. Système d'étanchéité de base pour une décharge de résidus de sel comprenant deux couches disposées l'une au-dessus de l'autre, où la couche supérieure est composée d'un mélange de gravier présentant une taille de grain comprise entre 8 et 16 mm, de sable présentant une taille de grain comprise entre 0 et 2 mm et de bentonite ou poussière d'argile avec un coefficient de perméabilité de k ≤ 10⁻⁹ m/s, et la couche inférieure est composée d'un mélange de sable présentant une taille de grain comprise entre 0 et 2 mm et de bentonite ou poussière d'argile avec un coefficient de perméabilité de k ≤ 5*10⁻¹⁰ m/s.

2. Système d'étanchéité de base pour une décharge de résidus de sel comprenant deux couches disposées l'une au-dessus de l'autre, où la couche supérieure est composée d'un mélange de gravier présentant une taille de grain comprise entre 8 et 16 mm, de sable présentant une taille de grain comprise entre 0 et 2 mm et de bentonite ou poussière d'argile avec un coefficient de perméabilité de k ≤ 10⁻⁹ m/s, et la couche inférieure est composée d'un mélange de sable présentant une taille de grain comprise entre 0 et 2 mm et de bentonite ou poussière d'argile avec un coefficient de perméabilité de k ≤ 5*10⁻¹⁰ m/s et d'un polymère pour réduire le coefficient de perméabilité.

3. Système d'étanchéité de base d'une décharge selon la revendication 1 ou 2,
**caractérisé en ce que**
l'angle de frottement de la couche supérieure est de ϕ ≥ 35°.

4. Système d'étanchéité de base d'une décharge selon une ou plusieurs des revendications précédentes,
**caractérisé en ce que**
l'angle de frottement de la couche inférieure est de ϕ ≥ 30°.

5. Système d'étanchéité de base d'une décharge selon une ou plusieurs des revendications précédentes,
**caractérisé en ce que**
la proportion de bentonite ou de poussière d'argile dans le mélange pour la couche supérieure est d'environ 2-10 pourcent en poids, de préférence 3-5 pourcent en poids.

6. Système d'étanchéité de base d'une décharge selon une ou plusieurs des revendications précédentes,
**caractérisé en ce que**
la proportion de bentonite ou de poussière d'argile dans le mélange pour la couche inférieure est ≥ 11 pourcent en poids.

7. Système d'étanchéité de base d'une décharge selon une ou plusieurs des revendications précédentes,
**caractérisé en ce que**
la couche supérieure a une épaisseur de ≥ 0,2 m.

8. Système d'étanchéité de base d'une décharge selon une ou plusieurs des revendications précédentes,
**caractérisé en ce que**
la couche inférieure a une épaisseur de ≥ 0,1 m.
